# EUROPEAN PATENT APPLICATION

(11) **EP 4 498 257 A1**
(43) Date of publication of application: **29.01.2025**
(21) Application number: 23814953.8
(22) Date of filing: 16.05.2023
(51) Int. Cl.: G06F 15/17

(54) **MULTI-CORE PROCESSOR AND RELATED INTER-CORE COMMUNICATION METHOD**

(30) Priority: 30.05.2022 CN 202210599174
(71) Applicant: Huawei Technologies Co., Ltd., Shenzhen, Guangdong 518129 (CN)
(72) Inventor: FANG, Bo, Shenzhen, Guangdong 518129 (CN); LIU, Hu, Shenzhen, Guangdong 518129 (CN); LAM, Hou Fun, Shenzhen, Guangdong 518129 (CN); SU, Zipei, Shenzhen, Guangdong 518129 (CN)
(74) Representative: Pfenning, Meinig & Partner mbB
(86) International application number: PCT/CN2023/094500
(87) International publication number: WO 2023/231768

(57) **Abstract**

Embodiments of this application disclose a multi-core processor and a related inter-core communication method. The multi-core processor includes an inter-core communication module and a plurality of processor cores. The plurality of processor cores include N first processor cores. Each of the first processor cores is configured to: execute a first task, and generate operation information after execution is completed, where the operation information includes a completion identifier of the first task, and one or more of a processor core identifier of the first processor core, an inter-core synchronization mode, and association information of the first task; and send the operation information to the inter-core communication module. The inter-core communication module is configured to: determine M second processor cores from the plurality of processor cores based on N pieces of operation information, and separately send the completion identifier to the M second processor cores. According to embodiments of the present invention, inter-core communication can be performed more efficiently and cost-effectively.

## Description

This application claims priority to Chinese Patent Application No. 202210599174.9, filed with the China National Intellectual Property Administration on May 30, 2022 and entitled "MULTI-CORE PROCESSOR AND RELATED INTER-CORE COMMUNICATION METHOD", which is incorporated herein by reference in its entirety.

### TECHNICAL FIELD

This application relates to the field of processor technologies, and in particular, to a multi-core processor and a related inter-core communication method.

### BACKGROUND

In recent years, scientific technologies such as the Internet, artificial intelligence technologies, big data, and cloud computing have developed rapidly. Large-scale data computing has become an important foundation for social progress. A large amount of data is generated every moment in the world. Various innovative applications such as self-driving, smart healthcare, wearable devices, industrial robots, service robots, smart finance, and smart retail are rapidly coming into focus.

Computing tasks are performed by various central processing units (central processing unit, CPU), graphics processing units (graphics processing unit, GPU), data processing units (data processing unit, DPU), AI accelerators, and more other processor units. With continuous expansion of task application scenarios, there are increasingly more scenarios in which a task can be divided for parallel running on a plurality of processor cores. Multi-core parallelism includes homogeneous core parallelism and heterogeneous core parallelism. When the plurality of processor cores run in parallel, inter-core communication between different processor cores is inevitably performed (in other words, the plurality of processor cores need to synchronize data). Therefore, how to perform multi-core communication more efficiently and cost-effectively is an urgent problem to be resolved.

### SUMMARY

A technical problem to be resolved by embodiments of this application is providing a multi-core processor and a related inter-core communication method, to implement inter-core communication more efficiently and cost-effectively.

According to a first aspect, an embodiment of this application provides a multi-core processor, including an inter-core communication module and a plurality of processor cores. The plurality of processor cores include N first processor cores, and N is an integer greater than or equal to 1. Each of the N first processor cores is configured to: execute a first task, and generate operation information after execution is completed, where the operation information includes a completion identifier of the first task, and one or more of a processor core identifier of the first processor core, an inter-core synchronization mode, and association information of the first task; and send the operation information to the inter-core communication module. The inter-core communication module is configured to: determine M second processor cores from the plurality of processor cores based on N pieces of operation information, where M is an integer greater than or equal to 1; and separately send the completion identifier of the first task to the M second processor cores.

In an embodiment of the present invention, the inter-core communication module that is not available in the conventional technology is added to the multi-core processor, to uniformly manage communication between the plurality of processor cores. In other words, after determining that the first task (the first task may be divided into one or more subtasks, and therefore the first task may be executed in parallel by one or more source processor cores) run on the source processor core is completed, the inter-core communication module sends the completion identifier of the task to a destination processor core, so that the destination processor core can sense time when execution of the first task is completed. In this way, inter-core communication efficiency is improved. Specifically, the first task may be run by one or more source processor cores. After completing execution of the first task, all the source processor cores send the operation information of the first task to the inter-core communication module. After receiving operation information sent by all the source processor cores, the inter-core communication module may determine the destination processor core that needs to use an execution result of the first task, and further send the completion identifier of the first task to the destination processor core, to notify the destination processor core that execution of the first task is completed. Then, the destination processor core may directly obtain the execution result of the first task from a memory. In the conventional technology, because the destination processor core cannot sense whether the source processor core has completed execution of the first task, the destination processor core performs polling or periodically accesses the memory, to actively query whether execution of the first task is completed, and stops the query only after determining that execution of the first task is completed. Then, the destination processor core obtains the execution result of the first task from the memory. Consequently, when determining whether execution of the first task is completed, the destination processor core keeps occupying bus resources, resulting in waste of power and bus bandwidth of both the processor core and an entire system. However, in an embodiment of the present invention, the inter-core communication module that is not available in the conventional technology is added to the multi-core processor, to uniformly manage communication between the plurality of processor cores. In other words, after determining that the first task run on all the source processor cores is completed, the inter-core communication module sends the completion identifier of the task to the destination processor core, so that the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, the inter-core communication module is further configured to: allocate one first virtual core to each of the N first processor cores, and establish a mapping relationship between the first virtual core and the processor core identifier of the first processor core; and separately store the operation information into the corresponding first virtual core based on the processor core identifier of each first processor core.

In an embodiment of the present invention, one virtual core may be allocated to each source processor core (that is, the first processor core), and the mapping relationship between the virtual core and the processor core identifier of the source processor core is established, so that one virtual core corresponds to one physical processor core. It is assumed that the first task is executed in parallel on the plurality of source processor cores. In this case, after receiving operation information of the first task, the inter-core communication module may determine the destination processor core (that is, the second processor core). After receiving the operation information sent by all the source processor cores, the inter-core communication module sends the completion identifier of the first task to the destination processor core. In this procedure, because each source processor core runs at a different speed, the inter-core communication module receives the operation information at different time. Further, the operation information sent by each source processor core may be stored in the corresponding virtual core, to avoid losing the operation information from the source processor core. If the operation information from the source processor core is lost, it is necessary to re-determine whether the source processor core has completed execution of the first task. Consequently, inter-core communication efficiency is reduced. However, in an embodiment of the present invention, the virtual core may store the operation information generated by the corresponding source processor core, to avoid losing the operation information from the source processor core. In this way, inter-core communication efficiency is improved.

In a possible implementation, the operation information includes the inter-core synchronization mode, and the inter-core communication module is specifically configured to: determine, based on the inter-core synchronization mode in the operation information and a quantity of pieces of received operation information, whether the N first processor cores reach a synchronization point, where the inter-core synchronization mode includes one or more of a one-to-one synchronization mode, a one-to-many synchronization mode, a many-to-one synchronization mode, and a many-to-many synchronization mode; and send the completion identifier of the first task to the M second processor cores if the synchronization point is reached.

In an embodiment of the present invention, the inter-core communication module may first determine the inter-core synchronization mode in the operation information, then determine a quantity of the source processor cores based on the inter-core synchronization mode, and determine whether all the source processor cores have completed execution of the first task. If the inter-core communication module has received the operation information that is of the first task and that is sent by all the source processor cores, this indicates that all the source processor cores have completed execution of the first task. When all the source processor cores have completed execution of the first task, that is, a quantity of pieces of operation information that is of the first task and that is received by the inter-core communication module is consistent with the quantity of the source processor cores, this indicates that all the source processor cores reach the synchronization point. Further, the inter-core communication module may send the task completion identifier of the first task to the destination processor core, to notify the destination processor core that all source processor cores have completed execution of the first task. In an embodiment of the present invention, the inter-core communication module uniformly manages communication between the plurality of processor cores. In other words, after determining that the first task run on all the source processor cores is completed, the inter-core communication module sends the completion identifier of the task to the destination processor core. Therefore, the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, the operation information further includes the association information of the first task, and the inter-core communication module is further configured to determine the M second processor cores from the plurality of processor cores based on the inter-core synchronization mode and the association information of the first task in the N pieces of operation information.

In an embodiment of the present invention, the inter-core communication module may determine the destination processor core from the plurality of processor cores based on the association information of the first task and the inter-core synchronization mode in the operation information. In other words, the inter-core communication module may first determine the quantity M of the destination processor cores based on the inter-core synchronization mode in each operation information, and then determine, based on the association information of the first task, a target task associated with the first task (for example, a task that needs to use the execution result of the first task). Further, all the M processor cores that execute the target task may be determined as the destination processor cores. In an embodiment of the present invention, the inter-core communication module uniformly manages communication between the plurality of processor cores. In other words, after determining that the first task run on all the source processor cores is completed, the inter-core communication module sends the completion identifier of the task to the destination processor core. Therefore, the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, each of the N first processor cores is further configured to store an execution result of the first task into a storage area after execution of the first task is completed.

In an embodiment of the present invention, after completing execution of the first task, each source processor core needs to send the operation information of the first task to the inter-core communication module, and also needs to store the execution result of the first task into the storage area (for example, the memory), so that the destination processor core can directly obtain the execution result of the first task from the memory after receiving the task completion identifier sent by the inter-core communication module. In an embodiment of the present invention, the inter-core communication module uniformly manages communication between the plurality of processor cores. In other words, after determining that the first task run on all the source processor cores is completed, the inter-core communication module sends the completion identifier of the task to the destination processor core. Therefore, the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, each of the M second processor cores is configured to: receive the completion identifier that is of the first task and that is sent by the inter-core communication module, and record the completion identifier of the first task in an identifier table of the second processor core; and when the second processor core needs to access the execution result of the first task, read the execution result from the storage area if the completion identifier of the first task exists in the identifier table.

In an embodiment of the present invention, after receiving the task completion identifier that is of the first task and that is sent by the inter-core communication module, the destination processor core may store the task completion identifier in an identifier table of the destination processor core. Further, when the second processor core needs to use the execution result of the first task during running, the second processor core checks whether the task completion identifier of the first task exists in the identifier table. If the task completion identifier exists in the identifier table, this indicates that the execution result of the first task has been stored into the storage area (for example, the memory), and the destination processor core may directly obtain the execution result from the memory. Alternatively, if the task completion identifier does not exist in the identifier table, this indicates that execution of the first task is not completed, and the destination processor core may suspend running, to wait for the inter-core communication module to send the task completion identifier of the first task, and then obtain the execution result of the first task from the memory. In an embodiment of the present invention, the inter-core communication module uniformly manages communication between the plurality of processor cores. In other words, after determining that the first task run on all the source processor cores is completed, the inter-core communication module sends the completion identifier of the task to the destination processor core. Therefore, the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, the inter-core communication module is further configured to: allocate one second virtual core to each of the M second processor cores, and establish a mapping relationship between the second virtual core and a processor core identifier of the second processor core; and record, in the corresponding second virtual core based on processor core identifiers of the M second processor cores, a quantity of completion identifiers received by each second processor core.

In an embodiment of the present invention, one virtual core may be allocated to each destination processor core (that is, the second processor core), and the mapping relationship between the virtual core and the processor core identifier of the destination processor core is established, so that one virtual core corresponds to one physical processor core. Because the inter-core communication module may send a plurality of task completion identifiers (that is, completion identifiers of different tasks) to the destination processor core, to prevent the inter-core communication module from omitting a task completion identifier, a quantity of task completion identifiers that can be received by each destination processor core is stored in the corresponding virtual core. In this way, the inter-core communication module may determine, based on the quantity of the task completion identifiers stored in the virtual core, whether all the task completion identifiers are delivered to the destination processor core. If the inter-core communication module successfully delivers one task completion identifier, the quantity of the task completion identifiers in the virtual core may be decreased by 1. In addition, in an embodiment of the present invention, the inter-core communication module uniformly manages communication between the plurality of processor cores. In other words, after determining that the first task run on all the source processor cores is completed, the inter-core communication module sends the completion identifier of the task to the destination processor core. Therefore, the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

In a possible implementation, the inter-core communication module is further configured to: receive the first task, where the first task includes one or more of a type of a required processor core, a quantity of required processor cores, a quantity of subtasks into which the first task can be divided, and an inter-core communication identifier; and determine, based on the first task, the N first processor cores, and allocate the first task to the N first processor cores for processing.

In an embodiment of the present invention, if the first task delivered by a system carries information such as the type of the required processor core, the quantity of the required processor cores, the quantity of the subtasks into which the first task can be divided, and the inter-core communication identifier, the inter-core communication module may divide the received first task into N subtasks that can be executed in parallel, determine processor cores (that is, the first processor cores) configured to execute the N subtasks, and then allocate the N subtasks of the first task to the N first processor cores for parallel processing. In this way, task running time is shortened, and task processing efficiency is improved.

According to a second aspect, an embodiment of this application provides an inter-core communication method, applied to a multi-core processor. The multi-core processor includes an inter-core communication module and a plurality of processor cores. The plurality of processor cores include N first processor cores, and N is an integer greater than or equal to 1. The method includes: Each of the N first processor cores executes a first task, and generates operation information after execution is completed, where the operation information includes a completion identifier of the first task, and one or more of a processor core identifier of the first processor core, an inter-core synchronization mode, and association information of the first task, and sends the operation information to the inter-core communication module. The inter-core communication module determines M second processor cores from the plurality of processor cores based on N pieces of operation information, where M is an integer greater than or equal to 1; and separately sends the completion identifier of the first task to the M second processor cores.

In a possible implementation, the method further includes: The inter-core communication module allocates one first virtual core to each of the N first processor cores, and establishes a mapping relationship between the first virtual core and the processor core identifier of the first processor core; and separately stores the operation information into the corresponding first virtual core based on the processor core identifier of each first processor core.

In a possible implementation, the method further includes: The inter-core communication module allocates one first virtual core to each of the N first processor cores, and establishes a mapping relationship between the first virtual core and the processor core identifier of the first processor core; and separately stores the operation information into the corresponding first virtual core based on the processor core identifier of each first processor core.

In a possible implementation, the operation information includes the inter-core synchronization mode, and that the completion identifier of the first task is separately sent to the M second processor cores includes: The inter-core communication module determines, based on the inter-core synchronization mode in the operation information and a quantity of pieces of received operation information, whether the N first processor cores reach a synchronization point, where the inter-core synchronization mode includes one or more of a one-to-one synchronization mode, a one-to-many synchronization mode, a many-to-one synchronization mode, and a many-to-many synchronization mode. The completion identifier of the first task is sent to the M second processor cores if the synchronization point is reached.

In a possible implementation, the operation information further includes the association information of the first task, and the method further includes: The inter-core communication module determines, the M second processor cores from the plurality of processor cores based on the inter-core synchronization mode and the association information of the first task in the N pieces of operation information.

In a possible implementation, the method further includes: storing an execution result of the first task into a storage area after execution of the first task is completed.

In a possible implementation, the method further includes: Each of the M second processor cores receives the completion identifier that is of the first task and that is sent by the inter-core communication module, and records the completion identifier of the first task in an identifier table of the second processor core; and when the second processor core needs to access the execution result of the first task, reads the execution result from the storage area if the completion identifier of the first task exists in the identifier table.

In a possible implementation, the method further includes: The inter-core communication module allocates one second virtual core to each of the M second processor cores, and establishes a mapping relationship between the second virtual core and a processor core identifier of the second processor core; and records, in the corresponding second virtual core based on processor core identifiers of the M second processor cores, a quantity of completion identifiers received by each second processor core.

In a possible implementation, the method further includes: The inter-core communication module receives the first task, where the first task includes one or more of a type of a required processor core, a quantity of required processor cores, a quantity of subtasks into which the first task can be divided, and an inter-core communication identifier; and determines, based on the first task, the N first processor cores, and allocates the first task to the N first processor cores for processing.

According to a third aspect, this application provides a computer storage medium. The computer storage medium stores a computer program, and when the computer program is executed by a processor, the method according to any item of the second aspect is implemented.

According to a fourth aspect, an embodiment of this application provides an electronic device. The electronic device includes a processor, and the processor is configured to support the electronic device to implement a corresponding function in the inter-core communication method provided in the second aspect. The electronic device may further include a memory. The memory is configured to be coupled to the processor, and the memory stores program instructions and data that are necessary for the electronic device. The electronic device may further include a communication interface, used for communication between the electronic device and another device or a communication network.

According to a fifth aspect, this application provides a chip system. The chip system includes a processor, configured to support an electronic device to implement the function in the second aspect, for example, generating or processing information in the inter-core communication method. In a possible design, the chip system further includes a memory, and the memory is configured to store program instructions and data that are necessary for the electronic device. The chip system may include a chip, or may include a chip and another discrete component.

According to a sixth aspect, this application provides a computer program. The computer program includes instructions, and when the computer program is executed by a computer, the computer is enabled to perform the method according to any item of the second aspect.

### BRIEF DESCRIPTION OF DRAWINGS

FIG. 1 is a diagram of a structure of a multi-core processor according to an embodiment of the present invention;
FIG. 2 is a diagram of a multi-core processor according to an embodiment of the present invention;
FIG. 3 is a diagram of a task descriptor according to an embodiment of the present invention;
FIG. 4 is a diagram of communication between two processor cores according to an embodiment of the present invention;
FIG. 5 is a schematic flowchart of task allocation according to an embodiment of the present invention;
FIG. 6 is a diagram of communication between a plurality of processor cores according to an embodiment of the present invention;
FIG. 7 is a diagram of another type of communication between a plurality of processor cores according to an embodiment of the present invention;
FIG. 8 is a diagram of a virtual core according to an embodiment of the present invention;
FIG. 9 is a diagram of a structure of a multi-core processor according to an embodiment of the present invention;
FIG. 10 is a schematic flowchart of an inter-core communication procedure according to an embodiment of the present invention; and
FIG. 11 is a flowchart of an inter-core communication method according to an embodiment of the present invention.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes unlisted steps or units, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

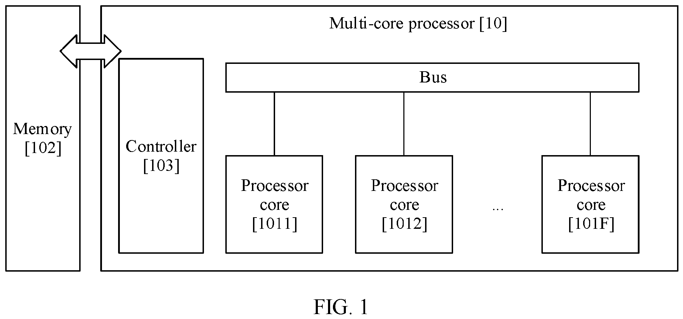

This application provides a multi-core processor. FIG. 1 is a diagram of a structure of the multi-core processor according to an embodiment of the present invention. The multi-core processor 10 integrates a plurality of processor cores in one chip. The processor cores have same or different functions and structures, and are integrated in the same chip in an effective manner. An application is allocated, in an effective division manner, to different processor cores for parallel processing. In this way, performance of a processor system is improved. The multi-core processor 10 may be located in any electronic device, for example, a computer, a mobile phone, a tablet computer, a personal digital assistant, an intelligent wearable device, an intelligent vehicle-mounted device, or an intelligent home appliance. The multi-core processor 10 may be specifically a chip, a chip set, or a circuit board on which a chip or a chip set is mounted. The chip, the chipset, or the circuit board on which the chip or the chipset is mounted may operate when driven by necessary software. Details are as follows.

A plurality of processor cores (for example, there are F processor cores in FIG. 1, where F is an integer greater than 1), for example, a processor core 1011, a processor core 1012, ..., and a processor core 101F, are most important components of a central processing unit (central processing unit, CPU), where a processor core is short for a processor core and is also referred to as a core. The processor core is manufactured from single-crystal silicon by using a specific production process. The processor core performs all of computing, reception or storage of commands, and data processing that are on the CPU. The processor cores may be homogeneous or heterogeneous. In other words, structures of the processor cores (1011, 1012, ..., and 101F) may be the same or different. This is not specifically limited in embodiments of the present invention. A type of the processor core may be a matrix acceleration unit, a vector processing unit, a general-purpose processing unit, an AI processing unit, a graphics processing unit, a video processing unit, a direct memory access unit, a sensor processing unit, or the like. This is not specifically limited in embodiments of the present invention. It may be understood that the processor core 1011 and (F-1) processor cores may be coupled to each other and communicate with each other through a bus or in another manner. This is not specifically limited herein. When the plurality of processor cores run a same task in parallel, data synchronization between the different cores cannot be avoided, in other words, the processor cores need to communicate with each other.

A memory (memory) 102 may be located outside the multi-core processor 10. The memory is usually a volatile memory, and when a power failure occurs, content stored on the volatile memory is lost. The volatile memory is also referred to as a primary memory. The memory 102 in this application includes a readable and writable running memory, and is configured to temporarily store operation data of the plurality of processor cores and exchange data with a storage device or another external memory. The memory 102 may serve as a storage medium for temporary data of an operating system or another running program. It should be noted that the memory 102 may be a shared memory of the plurality of processor cores, that is, a memory that can be accessed by different processor cores in a computer system with the plurality of processor cores. The memory 102 may include one or more of a dynamic random-access memory (DRAM), a static random-access memory (SRAM), a synchronous dynamic random-access memory (SDRAM), and the like. The DRAM further includes a double data rate synchronous dynamic random-access memory (double data rate synchronous dynamic random-access memory, DDR SDRAM, DDR for short), a double data rate 2 synchronous dynamic random-access memory (DDR2), a double data rate 3 synchronous dynamic random-access memory (DDR3), a low-power double data rate 4 synchronous dynamic random-access memory (low-power double data rate 4, LPDDR4), a low-power double data rate 5 synchronous dynamic random-access memory (low-power double data rate 5, LPDDR 5), and the like.

The controller 103 is usually configured to manage and control communication between the multi-core processor 10 and an external storage device, and provide a standard (for example, a universal flash storage UFS standard) interface for communication between the multi-core processor 10 and the external storage device. Specifically, the controller 103 may transfer a command (for example, a write, read, or erase command) and data to the external storage device based on a read/write request sent by the multi-core processor 10, and feed back an event (for example, a command completion event, a command status event, or a hardware error event) to the multi-core processor 10 based on a data reading/writing result of the storage device. For the command or data sent from the multi-core processor 10, the controller 103 may convert, through encapsulation, the command or the data into a data packet that supports a protocol. For data received by the multi-core processor 10, the controller 103 performs a reverse operation. In an embodiment of the present invention, an inter-core communication module may be added to the controller 103 (in other words, a function of managing inter-core communication is added to the controller 103), to uniformly manage communication between the plurality of processor cores by using the controller 103. In this way, inter-core communication can be performed with high efficiency and low costs. For details, refer to the following descriptions of a multi-core processor and a related inter-core communication method.

It may be understood that the structure of the multi-core processor 10 in FIG. 1 is merely an implementation for some examples provided in embodiments of the present invention. The structure of the multi-core processor 10 in embodiments of the present invention includes but is not limited to the foregoing implementation.

The following describes embodiments of the present invention with reference to the accompanying drawings in embodiments of the present invention.

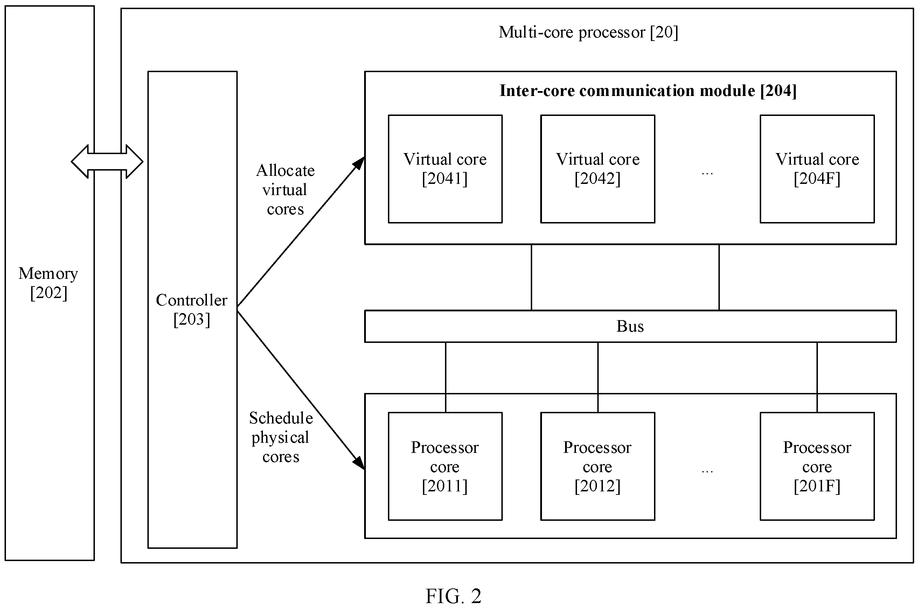

FIG. 2 is a diagram of a multi-core processor according to an embodiment of the present invention. The following describes in detail the multi-core processor in an embodiment of this application with reference to FIG. 2. An embodiment of the present invention may be applied to a scenario in which a plurality of processor cores run in parallel, to resolve a problem in the conventional technology in which a requirement for frequent memory access for inter-core communication between a plurality of processor cores, or a requirement for establishment of an interrupt mechanism leads to a decrease in processor core performance. As shown in FIG. 2, the multi-core processor 20 includes an inter-core communication module 204 and a plurality of processor cores (for example, a processor core 2011, a processor core 2012, ..., and a processor core 201F). The plurality of processor cores include N first processor cores, and N is an integer greater than or equal to 1. It should be noted that the multi-core processor 20 in FIG. 2 may include some or all functions of the multi-core processor 10 in FIG. 1. The inter-core communication module 204 may be located in the controller 203, or may be an independent module in the multi-core processor 20.

Each of the N first processor cores is configured to: execute a first task, and generate operation information after execution is completed, where the operation information includes a completion identifier of the first task, and one or more of a processor core identifier of the first processor core, an inter-core synchronization mode, and association information of the first task; and send the operation information to the inter-core communication module 204. Specifically, the N first processor cores may be configured to jointly execute the first task. When N is 1, this indicates that an entire computing task of the first task is executed by one processor core, and the first task may be a segment of program code. When N is greater than 1, this indicates that a computing task of the first task is executed by the N processor cores in parallel. In other words, the computing task of the first task is divided into N subtasks, and the N subtasks are then allocated to different processor cores for parallel execution. Each of the N subtasks may be a segment of program code. It should be noted that when N is greater than 1, the N first processor cores may be processor cores of a same type, or may be processor cores of different types, specifically, the first task may be allocated based on a requirement of the first task. In an inter-core communication procedure, the first processor core is a source processor core (which may be understood as a party that provides an execution result of the first task) that needs to communicate with another processor core (for example, a second processor core). The completion identifier (for example, flag0) of the first task in the operation information may indicate that the first processor core has completed execution of the running first task. The processor core identifier in the operation information is the processor core identifier (that is, a physical core identifier) of the first processor core. The inter-core synchronization mode in the operation information may be a one-to-one synchronization mode, a one-to-many synchronization mode, a many-to-one synchronization mode, a many-to-many synchronization mode, or the like. The association information of the first task in the operation information may include information about a target task associated with the first task (for example, a task that needs to use the execution result of the first task, or a task that needs to be synchronized with the first task). M second processor cores may be configured to jointly execute the target task, and serve as a destination processor core (which may be understood as a party that obtains the execution result of the first task) in an inter-core communication procedure. It should be further noted that the first task executed on the source processor core and the target task executed on the destination processor core may be tasks of different types, or may be tasks of a same type. This is not limited herein. In addition, any processor core of the multi-core processor 20 may execute a plurality of different tasks. Therefore, each processor core may serve as a source processor core to provide an execution result of a task for another processor core, or may serve as a destination processor core to obtain a task execution result for another processor core. In an embodiment of the present invention, after the first processor core has completed computing of a task, the first processor core needs to send the operation information of the task to the inter-core communication module 204. The operation information includes but is not limited to a completion identifier of the task, the processor core identifier of the first processor core, the inter-core synchronization mode, and association information of the task, so that the inter-core communication module 204 can uniformly manage communication between different processor cores. In this way, inter-core communication efficiency is improved.

In a possible implementation, the inter-core communication module 204 is further configured to: receive the first task, where the first task includes one or more of a type of a required processor core, a quantity of required processor cores, a quantity of subtasks into which the first task can be divided, and an inter-core communication identifier; and determine, based on the first task, the N first processor cores, and allocate the first task to the N first processor cores for processing. Specifically, if the first task delivered by a system carries information such as the type of the required processor core, the quantity of the required processor cores, the quantity of the subtasks into which the first task can be divided, and the inter-core communication identifier, the inter-core communication module 204 may divide the received first task into N subtasks that can be executed in parallel, determine processor cores (that is, the first processor cores) configured to execute the N subtasks, and then allocate the N subtasks of the first task to the N first processor cores for parallel processing. In this way, task running time is shortened, and task processing efficiency is improved.

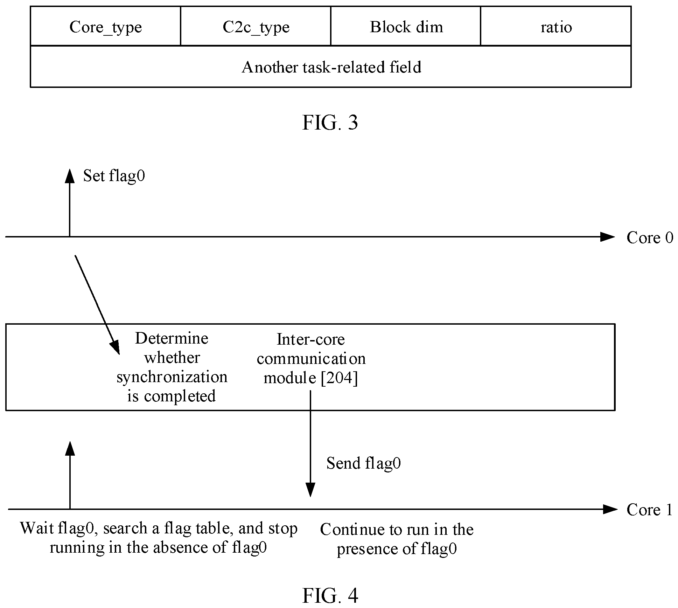

Optionally, in a heterogeneous multi-core service scenario, the multi-core processor 20 may store a task descriptor in an agreed format. A to-be-executed task (for example, the first task) may carry the task descriptor. The task descriptor is information about the to-be-executed task, and may be used to notify the controller 203 (the controller 203 may be responsible for functions such as task scheduling and deployment, and resource conflict arbitration) of a scheduling requirement and related information of the to-be-scheduled task. FIG. 3 is a diagram of a task descriptor according to an embodiment of the present invention. As shown in FIG. 3, a task descriptor in the figure may include a processor core type (Core_type), which is a processor core type required by a to-be-executed task. A task of a type may occupy a plurality of heterogeneous processor cores for execution of the task. An inter-core communication type (communication to communication type, C2C_type) indicates whether the task needs to use an inter-core communication function. When the inter-core communication function needs to be used, virtual cores (for example, a virtual core 2041, a virtual core 2042, ..., and a virtual core 204F in FIG. 2) may be allocated to the processor cores for inter-core communication. A ratio (Ratio) indicates a processor core-processor core ratio when a plurality of processor cores are selected to jointly execute the task. A quantity of subtasks for division is a quantity of parallel subtasks into which the task process can be divided. Other association information of the task is used for describing, for example, a data address, a size, and an instruction address of the task.

The inter-core communication module 204 is configured to: determine the M second processor cores from the plurality of processor cores based on N pieces of operation information, where M is an integer greater than or equal to 1; and separately send the completion identifier of the first task to the M second processor cores. Specifically, after receiving the operation information sent by all source processor cores (that is, the first processor cores), the inter-core communication module 204 may determine the destination processor core (that is, the second processor core) from the plurality of processor cores based on the operation information. Then, the inter-core communication module 204 may send the task completion identifier of the first task to the destination processor core, to notify the destination processor core that all source processor cores have completed execution of the first task. Further, when the destination processor core needs to use the execution result of the first task, if the destination processor core has received the completion identifier of the task, the destination processor core may directly read required data from the memory 202. Alternatively, when the destination processor core does not need to use the execution result of the first task, if the destination processor core has not received the completion identifier of the task, the destination processor core may stop running, to wait for the inter-core communication module 204 to send the completion identifier of the first task. Optionally, if there is no need for data synchronization between the destination processor core and the source processor core (that is, the destination processor core does not need to use the execution result of the first task executed by the source processor), but there is a need for some other synchronization (for example, a need for running rate synchronization, that is, the destination processor core needs to wait for the source processor core to complete execution of the first task before continuing to execute a next task), in this case, when the destination processor core needs to determine whether the source processor core has completed execution of the first task, if the destination processor core has received the completion identifier of the task, the destination processor core may continue to execute a subsequent program. Otherwise, if the destination processor core has not received the completion identifier of the task, the destination processor core may stop running, to wait for the inter-core communication module 204 to send the completion identifier of the first task. It should be noted that the M second processor cores may include one or more of the N first processor cores. In other words, in some applications, the source processor core may also serve as a destination processor core. In addition, after sending the operation information of the first task to the inter-core communication module 204, the first processor core may further continue to execute a next task. In an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. In this way, inter-core communication efficiency is improved. However, in the conventional technology, inter-core communication is performed by continuously accessing a memory through soft lockup. Because the destination processor core cannot sense whether the source processor core has completed execution of the first task, the destination processor core performs polling or periodically accesses the memory, to actively query whether execution of the first task is completed, and stops the query only after determining that execution of the first task is completed. Then, the destination processor core obtains the execution result of the first task from the memory. Consequently, when determining whether execution of the first task is completed, the destination processor core keeps occupying bus resources, resulting in waste of power and bus bandwidth of both the processor core and an entire system. Inter-core communication is performed through an interrupt. In other words, after the source processor core triggers the interrupt of the destination processor core, the destination processor core responds to the interrupt, and starts to read data written by the source processor core into the memory. However, because a delay is long when the source processor core triggers the interrupt of the destination processor core, inter-core communication efficiency is low. In addition, when responding to the interrupt, the destination processor core needs to stop a task that is being executed. Consequently, performance of the destination processor core is also reduced.

FIG. 4 is a diagram of communication between two processor cores according to an embodiment of the present invention. For example, as shown in FIG. 4, it is assumed that all computing tasks of a first task are executed by one processor core (for example, a core 0). In other words, the core 0 is used as a source processor core (that is, the first processor core). For the core 0, after completing execution of the first task, the core 0 executes set_flag0 (the instruction is run only after execution of the first task is completed). In other words, operation information of the first task is sent to the inter-core communication module 204. The operation information includes but is not limited to a completion identifier flag0 of the first task, information about a target task associated with the first task, and a one-to-one synchronization mode. Then, the inter-core communication module 204 may determine, based on the operation information, that a destination processor core (that is, the second processor core) is a core 1, and then send flag0 to the core 1. It should be noted that when there are a plurality of destination processor cores, the inter-core communication module 204 needs to send flag0 to each destination processor core. For the core 1, when a program on the core 1 runs to wait flag0 (that is, when an execution result of the first task needs to be invoked), the core 1 queries an identifier table (flag table) of the core 1 to determine whether flag0 exists. If flag0 exists, the core 1 proceeds to obtain the required execution result of the first task from the memory 202. If flag0 does not exist, the core 1 stops running, to wait for the core 0 to initiate set _flag0. The inter-core communication module 204 determines a synchronization type and determines whether the source processor core really reaches a synchronization point. If the source processor core reaches the synchronization point, the inter-core communication module 204 broadcasts flag0 to the core 1, and then the core 1 updates the identifier table of the core 1. When flag0 exists in the identifier table, the program on the core 1 continues to run normally, for example, obtains the execution result of the first task from the memory 202.

In a possible implementation, the inter-core communication module 204 is further configured to: allocate one first virtual core to each of the N first processor cores, and establish a mapping relationship between the first virtual core and the processor core identifier of the first processor core; and separately store the operation information into the corresponding first virtual core based on the processor core identifier of each first processor core. Optionally, when allocating a task to a processor core, the inter-core communication module 204 may allocate a virtual core to each processor core that needs to perform inter-core communication, and the virtual core may be used to record information associated with the processor core. Specifically, one virtual core may be allocated to each source processor core (that is, the first processor core), and the mapping relationship between the virtual core and the processor core identifier of the source processor core is established, so that one virtual core corresponds to one physical processor core. It should be noted that as shown in FIG. 2, the virtual core of the first processor core may be a segment of storage space in the inter-core communication module 204, and may be used to record the operation information from each first processor core, and the like. In the many-to-one synchronization mode or the many-to-many synchronization mode, that is, when the first task is executed on the plurality of source processor cores, before sending completion identifiers of the first task to the destination processor core, the inter-core communication module 204 needs to wait for all the source processor cores to send operation information of the first task. In this procedure, because each source processor core runs at a different speed, the inter-core communication module 204 receives the operation information at different time. Further, the operation information sent by each source processor core may be stored in the corresponding virtual core, to avoid losing the operation information from the source processor core. If the operation information from the source processor core is lost, it is necessary to re-determine whether the source processor core has completed execution of the first task. Consequently, inter-core communication efficiency is reduced. However, in an embodiment of the present invention, the virtual core may store the operation information generated by the corresponding source processor core, to avoid losing the operation information from the source processor core. In this way, inter-core communication efficiency is improved. Optionally, the source processor core writes, according to a store instruction, the generated operation information into the virtual core corresponding to the source processor core.

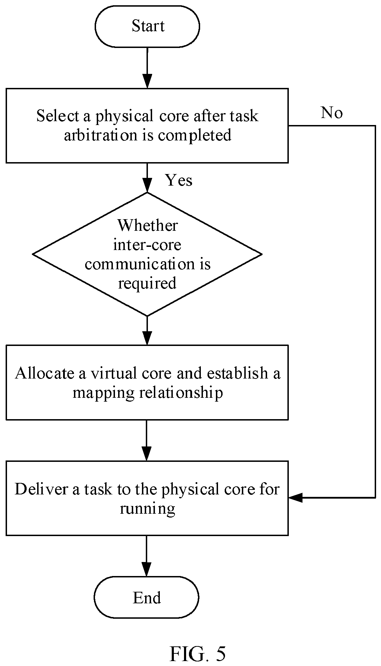

FIG. 5 is a schematic flowchart of task allocation according to an embodiment of the present invention. For example, as shown in FIG. 5, initialization configuration is performed first. Before a computing task (that is, the first task) is executed, a software technician needs to configure a task descriptor in the computing task. When the task descriptor is configured, if the computing task needs to use inter-core communication, a related field may be added to the task descriptor, to notify a hardware scheduler (which may be the inter-core communication module 204 described above) that the computing task is an inter-core communication task. For detailed descriptions of the task descriptor, refer to the foregoing descriptions in FIG. 3. Details are not described herein again. Then, after obtaining a computing task through arbitration, the hardware scheduler (which may be the controller 203 described above) may select one or more executor physical cores (that is, the processor cores) on which the computing task is run. Specifically, the computing task may be divided into a plurality of subtasks for parallel execution (that is, a dependency relationship is removed from the computing task), and the hardware scheduler then may schedule the computing task to an actual processor core for running. Further, when the computing task is scheduled to the processor core, a task descriptor of the computing task further needs to be determined first, and then it is determined whether inter-core communication needs to be performed for the computing task. If inter-core communication is not required, a conventional task delivery procedure may be skipped. Alternatively, if inter-core communication is required, an inter-core communication procedure needs to be continued. The following describes the inter-core communication procedure. First, a virtual core may be allocated to the processor core. In other words, when a computing task needs to use an inter-core communication function, before the computing task is actually scheduled to the processor core for running, an idle virtual core in the inter-core communication module 204 (which may be a segment of storage space in the inter-core communication module 204) may be first applied for. If there are plenty of virtual cores, the task cannot be delivered. If there is a deficiency in virtual cores, a virtual core for the task is allocated. In this case, a mapping relationship between the virtual core and a processor core identifier of the processor core may be established and stored in the virtual core, so that one virtual core corresponds to one physical processor core. It should be emphasized that determining for the inter-core communication and forwarding may be performed by hardware of the inter-core communication module 204. The inter-core communication module 204 may be a module inside the hardware scheduler, or may be an independent hardware module. This is not limited herein. Finally, after the task is delivered to a specific processor core for running, the task delivery procedure ends. It should be further emphasized that if inter-core communication needs to be performed for the task, set_flag and wait_flag instructions may be encountered during task running. In addition, because the processor core one-to-one corresponds to the virtual core in the inter-core communication module 204, a hardware resource in the virtual core may be used to record information like a flag counter, a task identifier, and a synchronization type that are used in the inter-core communication.

In a possible implementation, the operation information includes the inter-core synchronization mode, and the inter-core communication module 204 is specifically configured to: determine, based on the inter-core synchronization mode in the operation information and a quantity of pieces of received operation information, whether the N first processor cores reach a synchronization point, where the inter-core synchronization mode includes one or more of a one-to-one synchronization mode, a one-to-many synchronization mode, a many-to-one synchronization mode, and a many-to-many synchronization mode; and send the completion identifier of the first task to the M second processor cores if the synchronization point is reached. One task corresponds to one completion identifier. This application supports parallel use of a plurality of task completion identifiers for inter-core communication, and communication based on the plurality of task completion identifiers is performed without interference. After use of a task completion identifier is completed, the task completion identifier may be controlled and recycled by software for reuse. For example, it is assumed that in a 2-to-1 synchronization mode, the core 1 and a core 2 are source processor cores (that is, the first processor cores), a core 3 is a destination processor core (that is, the second processor core), and a first task is run on both the core 1 and the core 2 (a completion identifier of the first task may be flag0). After the core 1 and core 2 have completed execution of the first task, task completion identifiers in operation information sent to the inter-core communication module 204 are both flag0. In addition, after use of flag0 is completed, flag0 may be recycled by software for reuse. For the inter-core synchronization mode, the one-to-one synchronization mode indicates that inter-core communication is performed between one source processor core and one destination processor core, the one-to-many synchronization mode indicates that inter-core communication is performed between one source processor core and a plurality of destination processor cores, the many-to-one synchronization mode indicates that inter-core communication is performed between a plurality of source processor cores and one destination processor core, and the many-to-many synchronization mode indicates that inter-core communication is performed between a plurality of source processor cores and a plurality of destination processor cores. Specifically, the inter-core communication module 204 may first determine the inter-core synchronization mode in the operation information, for example, determine that the synchronization mode in the operation information is the 2-to-1 synchronization mode, then determine a quantity of the source processor cores based on the inter-core synchronization mode, and determine whether all the source processor cores have completed execution of the first task. If the inter-core communication module 204 has received the operation information that is of the first task and that is sent by all the source processor cores, this indicates that all the source processor cores have completed execution of the first task. When all the source processor cores have completed execution of the first task, that is, a quantity of pieces of operation information received by the inter-core communication module 204 is consistent with the quantity of the source processor cores, this indicates that all the source processor cores reach the synchronization point. For example, in the 2-to-1 synchronization mode, after receiving the operation information (carrying flag0) sent by the core 1 and the core 2, the inter-core communication module 204 may determine that the core 1 and the core 2 have completed execution of the first task (that is, the core 1 and the core 2 reach the synchronization point). Further, the inter-core communication module 204 may send the task completion identifier of the first task to the destination processor core, for example, send flag0 to the core 3, to notify the destination processor core that all source processor cores have completed execution of the first task. In an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. This avoids low inter-core efficiency that is caused when the destination processor core needs to keep accessing the memory 202 to determine whether execution of the first task is completed. In this way, inter-core communication efficiency is improved.

It is assumed that in a heterogeneous multi-core system, one task uses one first operation unit (for example, a matrix operation unit) and two second operation units (for example, vector operation units) to perform computing, and there is inter-core communication between the first operation unit and the second operation units. If inter-core communication needs to be performed between the first operation unit and the second operation unit, the first operation unit sends one piece of operation information (including the task completion identifier flagID) to the hardware scheduler (which may be the inter-core communication module 204 described above), and then the hardware scheduler is responsible for broadcasting the flagID to all second operation units (that is, second operation units A and B). If the second operation units need to communicate with the first operation unit, all the second operation units (the second operation units A and B) send operation information (including the same task completion identifier) to the hardware scheduler, and then the hardware scheduler forwards the task completion identifier to the first operation unit after collecting the operation information sent by all the second operation units. In this way, the first operation unit can obtain task execution results for the second operation units from the memory 202.

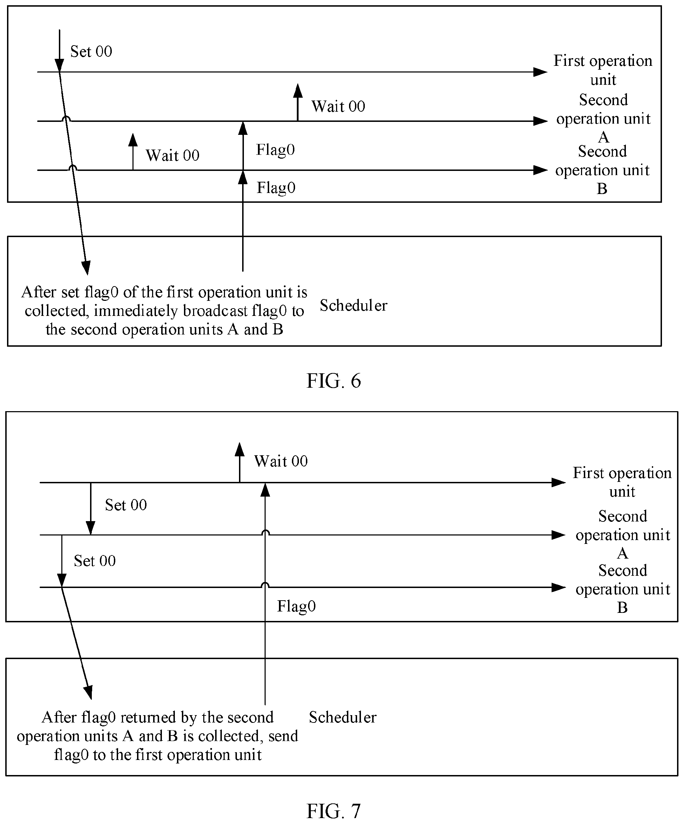

FIG. 6 is a diagram of communication between a plurality of processor cores according to an embodiment of the present invention. For example, as shown in FIG. 6, the figure indicates that two second operation units are synchronized with one first operation unit. Specifically, after receiving set _flag0 returned by the first operation unit, the hardware scheduler (that is, the inter-core communication module 204) may immediately broadcast flag0 to the second operation units A and B. It should be noted that when sending set _flag0 to the hardware scheduler, the first operation unit carries one additional piece of information to indicate that flag0 is an identifier used for inter-core communication. Then, the hardware scheduler broadcasts flag0 to both of the second operation units corresponding to the first operation unit.

FIG. 7 is a diagram of another type of communication between a plurality of processor cores according to an embodiment of the present invention. For another example, as shown in FIG. 7, the figure indicates that one first operation unit is synchronized with two second operation units. Specifically, after collecting set _flag0 sent by the two second operation units, the hardware scheduler forwards flag0 to the first operation unit, to achieve an objective of synchronizing the two second operation units with one first operation unit.

It should be noted that an inter-core communication mechanism based on the hardware scheduler (that is, the inter-core communication module 204) may include a plurality of types of execution processing units (that is, the plurality of processor cores), support a plurality of inter-core synchronization modes, and may also support point-to-point inter-core communication.

In a possible implementation, the operation information further includes the association information of the first task, and the inter-core communication module 204 is further configured to determine the M second processor cores from the plurality of processor cores based on the inter-core synchronization mode and the association information of the first task in the N pieces of operation information. Specifically, the inter-core communication module 204 may determine the destination processor core from the plurality of processor cores based on the association information of the first task and the inter-core synchronization mode in the operation information. In other words, the inter-core communication module 204 may first determine the quantity M of the destination processor cores based on the inter-core synchronization mode in each operation information, and then determine, based on the association information of the first task, a target task associated with the first task. Further, all the M processor cores that execute the target task may be determined as the destination processor cores. In an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. This avoids low inter-core efficiency that is caused when the destination processor core needs to keep accessing the memory 202 to determine whether execution of the first task is completed. In this way, inter-core communication efficiency is improved.

It should be noted that during programming, a programmer cannot determine which processor core or processor cores are specifically configured to execute the first task (the system may allocate the task to a specific processor core for processing). Therefore, tasks for which inter-core communication needs to be performed may be associated with each other. Then, the inter-core communication module 204 may determine, based on the association information of the first task, the target task (for example, a task that needs to use an execution result of the first task) associated with the first task, and may further all M processor cores that execute the target task as the destination processor cores.

In a possible implementation, each of the N first processor cores is further configured to store the execution result of the first task into a storage area after execution of the first task is completed. Specifically, after completing execution of the first task, each source processor core needs to send the operation information of the first task to the inter-core communication module 204, and also needs to store the execution result of the first task into the storage area (the storage area may include a storage medium, for example, the memory 202 or a cache), so that the destination processor core can directly obtain the execution result of the first task from the storage area after receiving the task completion identifier sent by the inter-core communication module 204. In an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. This avoids low inter-core efficiency that is caused when the destination processor core needs to keep accessing the memory 202 to determine whether execution of the first task is completed. In this way, inter-core communication efficiency is improved.

In a possible implementation, each of the M second processor cores is configured to: receive the completion identifier that is of the first task and that is sent by the inter-core communication module 204, and record the completion identifier of the first task in an identifier table of the second processor core; and when the second processor core needs to access the execution result of the first task, read the execution result from the storage area if the completion identifier of the first task exists in the identifier table. Specifically, after receiving the task completion identifier that is of the first task and that is sent by the inter-core communication module 204, the destination processor core may store the task completion identifier in an identifier table of the destination processor core. Further, when the second processor core needs to use the execution result of the first task during running, the second processor core checks whether the task completion identifier of the first task exists in the identifier table. If the task completion identifier exists in the identifier table, this indicates that the execution result of the first task has been stored into the storage area (for example, the memory 202), and the destination processor core may directly obtain the execution result from the memory 202. Alternatively, if the task completion identifier does not exist in the identifier table, this indicates that execution of the first task is not completed, and the destination processor core may suspend running, to wait for the inter-core communication module 204 to send the task completion identifier of the first task, and then obtain the execution result of the first task from the memory 202. In an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. This avoids low inter-core efficiency that is caused when the destination processor core needs to keep accessing the memory 202 to determine whether execution of the first task is completed. In this way, inter-core communication efficiency is improved.

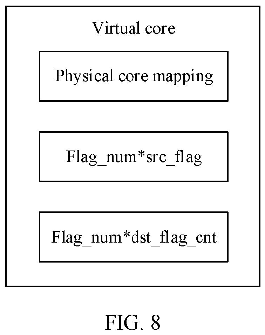

In a possible implementation, the inter-core communication module 204 is further configured to: allocate one second virtual core to each of the M second processor cores, and establish a mapping relationship between the second virtual core and a processor core identifier of the second processor core; and record, in the corresponding second virtual core based on processor core identifiers of the M second processor cores, a quantity of completion identifiers received by each second processor core. Specifically, one virtual core may be allocated to each destination processor core (that is, the second processor core), and the mapping relationship between the virtual core and the processor core identifier of the destination processor core is established, so that one virtual core corresponds to one physical processor core. Because the inter-core communication module 204 may send a plurality of task completion identifiers (that is, completion identifiers of different tasks) to the destination processor core, to prevent the inter-core communication module 204 from omitting a task completion identifier, a quantity of task completion identifiers that need to be received by each destination processor core may be stored in the corresponding virtual core. In this way, the inter-core communication module 204 may determine, based on the quantity of the task completion identifiers stored in the virtual core, whether all the task completion identifiers are delivered to the destination processor core. If the inter-core communication module 204 successfully delivers one task completion identifier, the quantity of the task completion identifiers in the virtual core may be decreased by 1. It should be noted that each processor core in the multi-core processor 20 may be used as a source processor core or a destination processor core. FIG. 8 is a diagram of a virtual core according to an embodiment of the present invention. As shown in FIG. 8, a specific quantity of virtual cores (which may be a segment of storage space) may be provided for the hardware inter-core communication module 204. The quantity of the virtual cores may limit a quantity of physical cores that perform inter-core communication in parallel. When the quantity of the virtual cores is equal to the quantity of the physical cores, all physical cores may participate in inter-core communication. Information such as a mapping relationship between the virtual core and the physical core, operation information (src_flag) sent by the physical core, and a quantity of task completion identifiers (dst_flag) that can be received by the physical core may be stored in the virtual core. When the processor core is used as the source processor core, a corresponding virtual core may record operation information sent by the processor core. When the processor core is used as the destination processor core, a corresponding virtual core may record a quantity of task identifiers that can be received. In other words, after execution of one task is completed, the quantity of dst_flag_cnt is increased by 1, indicating that a synchronization broadcast may be initiated to the destination processor core. In addition, in an embodiment of the present invention, the inter-core communication module 204 uniformly manages communication between the plurality of processor cores. In other words, after determining that the first task run on all the source processor cores is completed, the inter-core communication module 204 sends the completion identifier of the task to the destination processor core. Therefore, the destination processor core can sense, in a timely manner, time when execution of the first task is completed. This avoids low inter-core efficiency that is caused when the destination processor core needs to keep accessing the memory 202 to determine whether execution of the first task is completed. In this way, inter-core communication efficiency is improved.

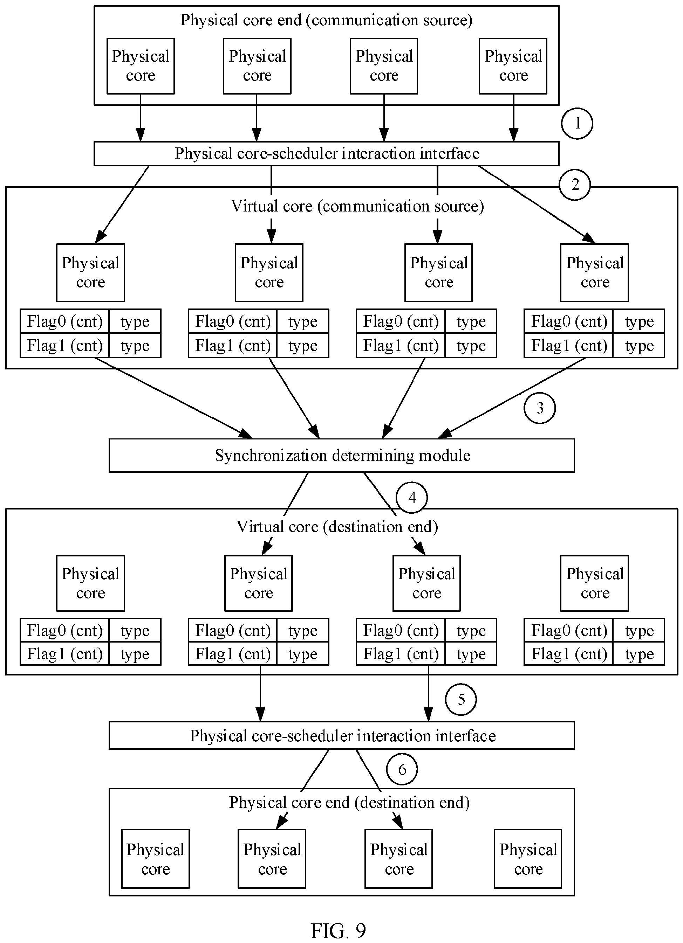

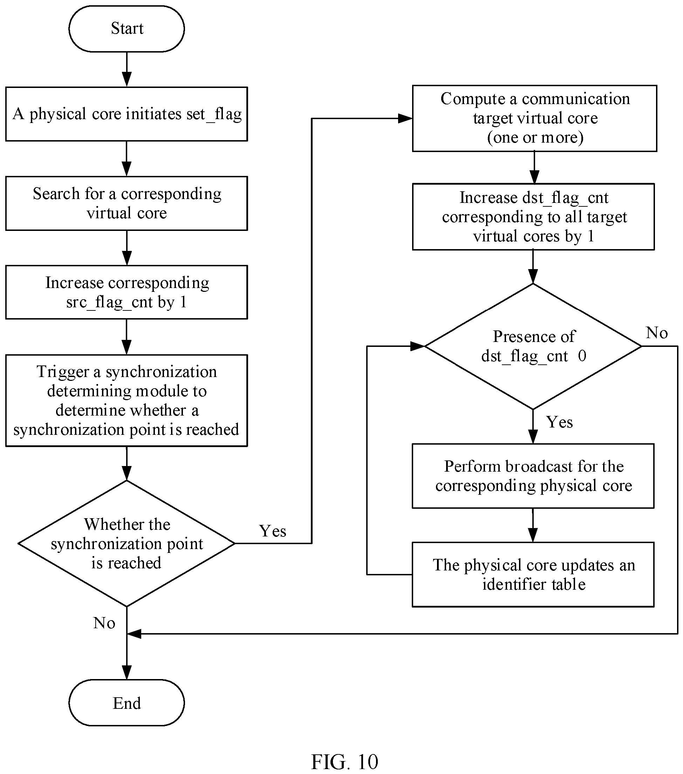

FIG. 9 is a diagram of a structure of a multi-core processor according to an embodiment of the present invention. For example, as shown in FIG. 9, the multi-core processor in the figure may include seven parts. A physical core end (a communication source) and a physical core end (a destination end) may belong to a same module at a physical layer, and a virtual core (a communication source) and a virtual core (a destination end) may belong to a same module at the physical layer. For ease of understanding, each of the physical core end and the virtual core is divided into two logical parts The physical core end (the communication source) is a source processor core that initiates a communication request, that is, sends a set_flag communication request to the inter-core communication module 204. A physical core-scheduler interaction interface receives the set_flag request from the physical core end, and sends the set_flag request to a corresponding virtual core. The virtual core (the communication source) receives the set_flag request sent by the physical core, and records a quantity of flags and a synchronization type. A synchronization determining module is configured to check flag statuses and flag types of all communication source virtual cores, to determine whether a synchronization point is reached (in a many-to-one synchronization mode or a many-to-many synchronization mode, the synchronization point is reached only in the presence of flags of a plurality of source processor cores). The virtual core (the communication target) receives a notification from the synchronization determining module, and a value on a counter for dst_flag of the virtual core is increased by 1. When the value on the counter for dst_flag is not 0, this indicates that the virtual core has been synchronized, and may broadcast the dst_flag to the communication target of the actual physical core end. The physical core-scheduler interaction interface receives a broadcast request of the virtual core, and sends the broadcast request to a corresponding physical core. The physical core end (the communication target) receives a broadcast that the synchronization point is reached, updates an identifier table (flag table) in the physical core, and cancels a pause state of wait_flag. It should be noted that the inter-core communication module 204 may include the physical core-scheduler interaction interface and the synchronization determining module. Further, FIG. 10 is a schematic flowchart of an inter-core communication procedure according to an embodiment of the present invention. The following describes an example of the inter-core communication procedure provided in an embodiment of the present invention with reference to FIG. 10. The procedure is as follows.

Aspect 1: A physical core initiates a set_flag operation. In a procedure of running a program, when running to a set_flag instruction, the physical core initiates a set_flag request to a hardware scheduler (that is, the inter-core communication module 204), where the set_flag request includes synchronization information such as a physical core ID, a flagID, and a synchronization type. After receiving operation information sent from a bus, the inter-core communication module 204 parses the operation information.

Aspect 2: The set_flag operation is mapped to a virtual core. After receiving the set_flag operation sent by the physical core, the inter-core communication module 204 queries a mapping relationship between the virtual core and the physical core, to find an ID of the virtual core corresponding to the physical core that initiates the request, and then forwards the received set_flag request information packet to the corresponding virtual core.

Aspect 3: The virtual core records the set_flag operation. After receiving the set_flag operation, the virtual core may record flag information, and a corresponding flag count may be increased by 1.

Aspect 4: A synchronization determining module is triggered to determine whether a synchronization point is reached. It may be determined, based on flag types, whether a quantity of flagIDs of any source processor core is not 0. If the quantity of the flagIDs of any source processor core is not 0, it is determined that the synchronization is successful.

Aspect 5: A communication target virtual core is determined. When determining that one synchronization is completed, the synchronization determining module may subtract one from a flagID count of all source virtual cores (that is, the synchronization is completed), and determine all target virtual cores of the synchronization.

Aspect 6: The target virtual core increases a dst_flag count by 1. After receiving a synchronization completion request initiated by the synchronization determining module, the target virtual core may increase a corresponding dst_flag count by 1.

Aspect 7: A broadcast operation is performed based on the dst_flag count, to notify the physical core of the completion of the synchronization. When dst_flag of a virtual core is not 0, this indicates that the virtual core is in a synchronization-completed state. In this case, a broadcast notification needs to be initiated to the corresponding physical core, to notify of the completion of the synchronization operation. The flagID is notified to the physical core, and the dst_flag count is decreased by one to indicate that the synchronization is completed.

Aspect 8: The physical core updates an identifier table (flag table). After receiving, from the hardware scheduler, the broadcast notification indicating that the synchronization operation is completed, the physical core updates a corresponding flag table.

In an embodiment of the present invention, the inter-core communication module that is not available in the conventional technology is added to the multi-core processor, to uniformly manage communication between the plurality of processor cores. In other words, after determining that the first task (the first task may be divided into one or more subtasks, and therefore the first task may be executed in parallel by one or more source processor cores) run on the source processor core is completed, the inter-core communication module sends the completion identifier of the task to a destination processor core, so that the destination processor core can sense time when execution of the first task is completed. In this way, inter-core communication efficiency is improved. Specifically, the first task may be run by one or more source processor cores. After completing execution of the first task, each source processor core sends the operation information of the first task to the inter-core communication module. After receiving operation information sent by all the source processor cores, the inter-core communication module may determine the destination processor core that needs to use an execution result of the first task, and further send the completion identifier of the first task to the destination processor core, to notify the destination processor core that execution of the first task is completed. Then, the destination processor core may directly obtain the execution result of the first task from a memory. In the conventional technology, because the destination processor core cannot sense whether the source processor core has completed execution of the first task, the destination processor core performs polling or periodically accesses the memory, to actively query whether execution of the first task is completed, and stops the query only after determining that execution of the first task is completed. Then, the destination processor core obtains the execution result of the first task from the memory. Consequently, when determining whether execution of the first task is completed, the destination processor core keeps occupying bus resources, resulting in waste of power and bus bandwidth of both the processor core and an entire system. However, in an embodiment of the present invention, the inter-core communication module that is not available in the conventional technology is added to the multi-core processor, to uniformly manage communication between the plurality of processor cores. In other words, after determining that the first task run on all the source processor cores is completed, the inter-core communication module sends the completion identifier of the task to the destination processor core, so that the destination processor core can sense, in a timely manner, time when execution of the first task is completed. This avoids low inter-core efficiency that is caused when the destination processor core needs to keep accessing the memory to determine whether execution of the first task is completed. In this way, inter-core communication efficiency is improved.

The multi-core processor in embodiments of the present invention is described in detail above, and a related method in embodiments of the present invention is provided below.

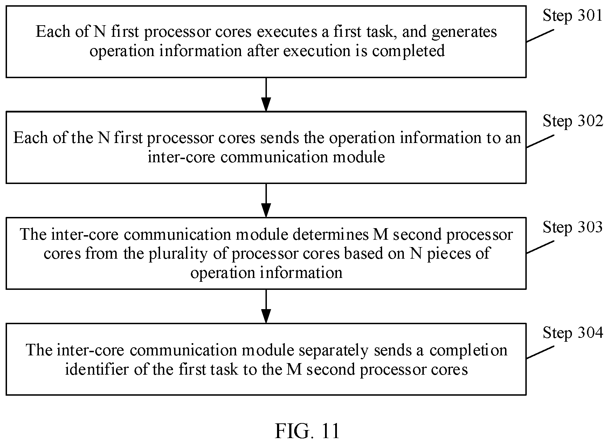

FIG. 11 is a flowchart of an inter-core communication method according to an embodiment of the present invention. The method is applicable to the multi-core processor shown in FIG. 2 and a device including the multi-core processor. The method may include the following steps S301 to S304. The multi-core processor includes an inter-core communication module and a plurality of processor cores. The plurality of processor cores include N first processor cores, and N is an integer greater than or equal to 1. The details are as follows.

Step S301: Each of the N first processor cores executes a first task, and generates operation information after execution is completed.

Specifically, the operation information includes a completion identifier of the first task, and one or more of a processor core identifier of the first processor core, an inter-core synchronization mode, and association information of the first task.

Step S302: Each of the N first processor cores sends the operation information to the inter-core communication module.

Step S303: The inter-core communication module determines M second processor cores from the plurality of processor cores based on N pieces of operation information.

Specifically, M is an integer greater than or equal to 1.

Step S304: The inter-core communication module separately sends the completion identifier of the first task to the M second processor cores.

In a possible implementation, the method further includes: The inter-core communication module allocates one first virtual core to each of the N first processor cores, and establishes a mapping relationship between the first virtual core and the processor core identifier of the first processor core; and separately stores the operation information into the corresponding first virtual core based on the processor core identifier of each first processor core.

In a possible implementation, the operation information includes the inter-core synchronization mode, and that the completion identifier of the first task is separately sent to the M second processor cores includes: The inter-core communication module determines, based on the inter-core synchronization mode in the operation information and a quantity of pieces of received operation information, whether the N first processor cores reach a synchronization point, where the inter-core synchronization mode includes one or more of a one-to-one synchronization mode, a one-to-many synchronization mode, a many-to-one synchronization mode, and a many-to-many synchronization mode. The completion identifier of the first task is sent to the M second processor cores if the synchronization point is reached.

In a possible implementation, the operation information further includes the association information of the first task, and the method further includes: The inter-core communication module determines, the M second processor cores from the plurality of processor cores based on the inter-core synchronization mode and the association information of the first task in the N pieces of operation information.

In a possible implementation, the method further includes: storing an execution result of the first task into a storage area after execution of the first task is completed.

In a possible implementation, the method further includes: Each of the M second processor cores receives the completion identifier that is of the first task and that is sent by the inter-core communication module, and records the completion identifier of the first task in an identifier table of the second processor core; and when the second processor core needs to access the execution result of the first task, reads the execution result from the storage area if the completion identifier of the first task exists in the identifier table.

In a possible implementation, the method further includes: The inter-core communication module allocates one second virtual core to each of the M second processor cores, and establishes a mapping relationship between the second virtual core and a processor core identifier of the second processor core; and records, in the corresponding second virtual core based on processor core identifiers of the M second processor cores, a quantity of completion identifiers received by each second processor core.

In a possible implementation, the method further includes: The inter-core communication module receives the first task, where the first task includes one or more of a type of a required processor core, a quantity of required processor cores, a quantity of subtasks into which the first task can be divided, and an inter-core communication identifier; and determines, based on the first task, the N first processor cores, and allocates the first task to the N first processor cores for processing.

According to the method provided in embodiments of the present invention, inter-core communication can be performed more efficiently and cost-effectively.

This application provides a computer storage medium. The computer storage medium stores a computer program, and when the computer program is executed by a processor, any one of the inter-core communication methods is implemented.

An embodiment of this application provides an electronic device. The electronic device includes a processor, and the processor is configured to support the electronic device to implement a corresponding function in any one of the inter-core communication methods. The electronic device may further include a memory. The memory is configured to be coupled to the processor, and the memory stores program instructions and data that are necessary for the electronic device. The electronic device may further include a communication interface, used for communication between the electronic device and another device or a communication network.

This application provides a chip system. The chip system includes a processor, configured to support an electronic device to implement the function, for example, generating or processing information in the inter-core communication method. In a possible design, the chip system further includes a memory, and the memory is configured to store program instructions and data that are necessary for the electronic device. The chip system may include a chip, or may include a chip and another discrete component.

This application provides a computer program. The computer program includes instructions, and when the computer program is executed by a computer, the computer is enabled to perform the inter-core communication method.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, and may be specifically a processor in the computer device) to perform all or some of the steps of the methods described in embodiments of this application. The foregoing storage medium includes any medium that can store program code, such as a USB flash drive, a removable hard disk drive, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A multi-core processor, comprising an inter-core communication module and a plurality of processor cores, wherein the plurality of processor cores comprise N first processor cores, and N is an integer greater than or equal to 1, wherein
each of the N first processor cores is configured to:
execute a first task, and generate operation information after execution is completed, wherein the operation information comprises a completion identifier of the first task, and one or more of a processor core identifier of the first processor core, an inter-core synchronization mode, and association information of the first task; and
send the operation information to the inter-core communication module; and
the inter-core communication module is configured to:
determine M second processor cores from the plurality of processor cores based on N pieces of operation information, wherein M is an integer greater than or equal to 1; and
separately send the completion identifier of the first task to the M second processor cores.

2. The multi-core processor according to claim 1, wherein the inter-core communication module is further configured to:
allocate one first virtual core to each of the N first processor cores, and establish a mapping relationship between the first virtual core and the processor core identifier of the first processor core; and
separately store the operation information into the corresponding first virtual core based on the processor core identifier of each first processor core.

3. The multi-core processor according to claim 1 or 2, wherein the operation information comprises the inter-core synchronization mode, and the inter-core communication module is specifically configured to:
determine, based on the inter-core synchronization mode in the operation information and a quantity of pieces of received operation information, whether the N first processor cores reach a synchronization point, wherein the inter-core synchronization mode comprises one or more of a one-to-one synchronization mode, a one-to-many synchronization mode, a many-to-one synchronization mode, and a many-to-many synchronization mode; and
send the completion identifier of the first task to the M second processor cores if the synchronization point is reached.

4. The multi-core processor according to claim 3, wherein the operation information further comprises the association information of the first task, and the inter-core communication module is further configured to:
determine the M second processor cores from the plurality of processor cores based on the inter-core synchronization mode and the association information of the first task in the N pieces of operation information.

5. The multi-core processor according to any one of claims 1 to 4, wherein each of the N first processor cores is further configured to:
store an execution result of the first task into a storage area after execution of the first task is completed.

6. The multi-core processor according to claim 5, wherein each of the M second processor cores is configured to:
receive the completion identifier that is of the first task and that is sent by the inter-core communication module, and record the completion identifier of the first task in an identifier table of the second processor core; and
when the second processor core needs to access the execution result of the first task, read the execution result from the storage area if the completion identifier of the first task exists in the identifier table.

7. The multi-core processor according to any one of claims 1 to 6, wherein the inter-core communication module is further configured to:
allocate one second virtual core to each of the M second processor cores, and establish a mapping relationship between the second virtual core and a processor core identifier of the second processor core; and
record, in the corresponding second virtual core based on processor core identifiers of the M second processor cores, a quantity of completion identifiers received by each second processor core.

8. The multi-core processor according to any one of claims 1 to 7, wherein the inter-core communication module is further configured to:
receive the first task, wherein the first task comprises one or more of a type of a required processor core, a quantity of required processor cores, a quantity of subtasks into which the first task can be divided, and an inter-core communication identifier; and
determine, based on the first task, the N first processor cores, and allocate the first task to the N first processor cores for processing.

9. An inter-core communication method, applied to a multi-core processor, wherein the multi-core processor comprises an inter-core communication module and a plurality of processor cores, the plurality of processor cores comprise N first processor cores, N is an integer greater than or equal to 1, and the method comprises:
executing, by each of the N first processor cores, a first task, generating operation information after execution is completed, wherein the operation information comprises a completion identifier of the first task, and one or more of a processor core identifier of the first processor core, an inter-core synchronization mode, and association information of the first task, and sending the operation information to the inter-core communication module; and
determining, by the inter-core communication module, M second processor cores from the plurality of processor cores based on N pieces of operation information, wherein M is an integer greater than or equal to 1; and separately sending the completion identifier of the first task to the M second processor cores.

10. The method according to claim 9, wherein the method comprises:
allocating, by the inter-core communication module, one first virtual core to each of the N first processor cores, and establishing a mapping relationship between the first virtual core and the processor core identifier of the first processor core; and
separately storing the operation information into the corresponding first virtual core based on the processor core identifier of each first processor core.

11. The method according to claim 9 or 10, wherein the operation information comprises the inter-core synchronization mode, and the separately sending the completion identifier of the first task to the M second processor cores comprises:
determining, by the inter-core communication module based on the inter-core synchronization mode in the operation information and a quantity of pieces of received operation information, whether the N first processor cores reach a synchronization point, wherein the inter-core synchronization mode comprises one or more of a one-to-one synchronization mode, a one-to-many synchronization mode, a many-to-one synchronization mode, and a many-to-many synchronization mode; and
sending the completion identifier of the first task to the M second processor cores if the synchronization point is reached.

12. The method according to claim 11, wherein the operation information further comprises the association information of the first task, and the method further comprises:
determining, by the inter-core communication module, the M second processor cores from the plurality of processor cores based on the inter-core synchronization mode and the association information of the first task in the N pieces of operation information.

13. The method according to any one of claims 9 to 12, wherein the method further comprises:
storing an execution result of the first task into a storage area after execution of the first task is completed.

14. The method according to claim 13, wherein the method further comprises:
receiving, by each of the M second processor cores, the completion identifier that is of the first task and that is sent by the inter-core communication module, and recording the completion identifier of the first task in an identifier table of the second processor core; and
when the second processor core needs to access the execution result of the first task, reading the execution result from the storage area if the completion identifier of the first task exists in the identifier table.

15. The method according to any one of claims 9 to 14, wherein the method further comprises:
allocating, by the inter-core communication module, one second virtual core to each of the M second processor cores, and establishing a mapping relationship between the second virtual core and a processor core identifier of the second processor core; and
recording, in the corresponding second virtual core based on processor core identifiers of the M second processor cores, a quantity of completion identifiers received by each second processor core.

16. The method according to any one of claims 9 to 15, wherein the method further comprises:
receiving, by the inter-core communication module, the first task, wherein the first task comprises one or more of a type of a required processor core, a quantity of required processor cores, a quantity of subtasks into which the first task can be divided, and an inter-core communication identifier; and
determining, based on the first task, the N first processor cores, and allocating the first task to the N first processor cores for processing.

17. A computer storage medium, wherein the computer storage medium stores a computer program, and when the computer program is executed by a processor, the method according to any one of claims 9 to 16 is implemented.

18. A computer program, wherein the computer program comprises instructions, and when the computer program is executed by a computer or a processor, the computer or the processor is enabled to perform the method according to any one of claims 9 to 16.
